# EUROPEAN PATENT SPECIFICATION

(11) **EP 3 617 541 B1**
(45) Date of publication and mention of the grant of the patent: **24.11.2021**
(21) Application number: 19193761.4
(22) Date of filing: 07.08.2015
(51) Int. Cl.: F16D 43/21, F16D 13/52, F16D 13/02, F16D 7/02

(54) **POWER TRANSMITTING APPARATUS**
KRAFTÜBERTRAGUNGSVORRICHTUNG
APPAREIL DE TRANSMISSION ÉLECTRIQUE

(30) Priority: 12.08.2014 JP 2014164085
(43) Date of publication of application: 04.03.2020
(62) Divisional of application: 15831300.7
(73) Proprietor: Kabushiki Kaisha F.C.C., Hamamatsu-Shi Shizuoka 431-1396 (JP)
(72) Inventor: KATAOKA, Makoto, Hamamatsu-shi, Shizuoka (JP); CHEN, Han Hiong, Hamamatsu-shi, Shizuoka (JP); AONO, Kaoru, Hamamatsu-shi, Shizuoka (JP)
(74) Representative: Cohausz & Florack

(56) References cited:
- EP-A1- 1 972 819
- EP-A1- 2 799 734
- EP-A2- 2 565 483
- WO-A1-2007/032283
- WO-A1-2007/088766
- JP-A- S60 157 515

## Description

### Technical Field

The present invention relates to a power transmitting apparatus that can arbitrarily transmit or cut off rotational force of an input member to an output member.

### Background Art

In general, power transmitting apparatuses for motorcycles are intended to arbitrarily transmit or cut off driving force of an engine to a transmission and a driving wheel. Such power transmitting apparatuses typically comprise an input member connected to the engine side, an output member connected to the transmission and the driving wheel side, and a clutch member connected to the output member. The power is transmitted by bringing a plurality of driving clutch plates and driven clutch plates into pressure contact, and the transmission of the power is cut off by releasing the pressure-contact force.

More specifically, a conventional power transmitting apparatus includes, as disclosed for example in PTL 1, a clutch housing that rotates with the rotation of an input member and in which a plurality of driving clutch plates are formed, a plurality of driven clutch plates formed alternately with the driving clutch plates of the clutch housing, a clutch member connected to an output member, and a pressure member that is attached to the clutch member movably in the axial direction of the clutch member and that can bring the driving clutch plates and the driven clutch plates into pressure contact or release pressure-contact force, with its axial movement relative to the clutch member, and is configured so as to be able to transmit or cut off rotational force input to the input member to the output member by bringing the driving clutch plates and the driven clutch plates into pressure contact or releasing pressure-contact force.

The above conventional power transmitting apparatus further has a pressure-contact assisting cam that, when the rotational force input to the input member can be transmitted to the output member and the pressure member and the clutch member rotate relative to each other, can move the pressure member and the clutch member closer to each other and thereby increase the pressure-contact force between the driving clutch plates and the driven clutch plates, and a back torque limiter cam that, when the rotation of the output member exceeds the rotational speed of the input member and the pressure member and the clutch member rotate relative to each other, moves the pressure member and the clutch member away from each other and thereby releases the pressure-contact force between the driving clutch plates and the driven clutch plates. The pressure-contact assisting cam and back torque limiter cam are each formed by opposing cam surfaces formed on the pressure member and the clutch member. When the pressure member and the clutch member rotate relative to each other to the normal rotation side, the pressure-contact assisting cam operates. When the pressure member and the clutch member rotate relative to each other to the reverse rotation side, the back torque limiter cam operates. The torque when the back torque limiter cam operates and the torque when the pressure-contact assisting cam operates are preferably set variously according to needs such as the form of a vehicle and driver's preferences.

### Citation List

### Patent Literature

PTL 1: Japanese Unexamined Patent Application Publication No. 2013-137039 See also EP 2799734 A1 as prior art.

### Summary of Invention

### Technical Problem

However, the above-described conventional power transmitting apparatus has the following problem.

For example, when the torque when the back torque limiter cam operates is set smaller, the cam surfaces of the back torque limiter cam and the cam surfaces of the pressure-contact assisting cam need to have different slope angles. In that case, there is a problem in that, in order to assemble the clutch member and the pressure member with the cam surfaces of the pressure-contact assisting cam facing each other and the cam surfaces of the back torque limiter cam facing each other, the clearance between a pair of cam surfaces constituting the back torque limiter cam must be set relatively large, and the clearance causes rattling, noise, and vibration. Therefore, the slope angles of the pressure-contact assisting cam and the back torque limiter cam are preferably set within a certain range.

When the torque when the back torque limiter cam operates is set smaller and the pressure-contact assisting cam is set so as not to rattle, the torque when the pressure-contact assisting cam operates is too large, and the power is transmitted at an unintended timing for a driver, and operability may be adversely affected. Therefore, it is not appropriate to needlessly adjust to the slope angle of the back torque limiter cam.

The present invention has been made in view of such circumstances, and an object of the invention is to provide a power transmitting apparatus in which the torque when a back torque limiter cam operates and the torque when a pressure-contact assisting cam operates can be made different from each other according to needs, and a clutch member and a pressure member can be satisfactorily assembled with the cam surfaces of the pressure-contact assisting cam facing each other and the cam surfaces of the back torque limiter cam facing each other, and rattling can thereby be reduced.

### Solution to Problem

The invention as defined by the claims.

### Advantageous Effects of Invention

According to the invention according to Claim 1, a receiving portion for the biasing means on the pressure member side comprises at least one receiving member separate from the pressure member, a first cam surface is formed on the at least one receiving member Therefore, the torque when the back torque limiter cam operates and the torque when the pressure-contact assisting cam operates can be made different from each other according to needs, and the clutch member and the pressure member can be satisfactorily assembled with the cam surfaces of the pressure-contact assisting cam facing each other and the cam surfaces of the back torque limiter cam facing each other, and rattling can thereby be reduced.

According to the invention according to Claim 5, the at least one receiving member has a fifth cam surface formed on the side opposite to the first cam surface, a sixth cam surface facing the fifth cam surface is formed on the pressure member, and the back torque limiter cam is formed by the first cam surface and the second cam surface, and the fifth cam surface and the sixth cam surface. Therefore, the torque when the back torque limiter cam operates can be easily set large.

According to the invention according to Claim 6, the at least one receiving member has a recessed portion that houses the biasing means, a receiving portion that is formed in the recessed portion and that is in contact with one end of the biasing means and receives biasing force, and a transmitting portion that is in contact with the pressure member and can transmit the biasing force of the biasing means to the pressure member. Therefore, when the back torque limiter cam operates, the pressure-contact force between the driving clutch plates and the driven clutch plates can be released more reliably and smoothly.

According to the invention according to Claim 7, at least cam surfaces formed on the at least one receiving member and cam surfaces facing those cam surfaces comprise flat surfaces. Therefore, the at least one receiving member is independent of the size of the power transmitting apparatus (diameters of the clutch member and the pressure member), the versatility of the at least one receiving member can be improved, and the production cost can be reduced.

According to the invention according to Claim 8, a plurality of the receiving members are concyclically attached to the pressure member. Therefore, the function as a pressure-contact assisting cam or a back torque limiter cam when the receiving members operate can be performed smoothly and reliably.

According to the invention according to Claim 9, the plurality of receiving members are integrated. Therefore, the plurality of receiving members can be attached to the pressure member all at once, and assemblability of the receiving members can be improved.

### Brief Description of Drawings

- [Fig. 1]: Fig. 1 is an overall longitudinal sectional view showing a power transmitting apparatus according to an embodiment of the present invention.
- [Fig. 2]: Fig. 2 is a plan view showing a clutch member in the power transmitting apparatus.
- [Fig. 3]: Fig. 3 is a back view showing the clutch member in the power transmitting apparatus.
- [Fig. 4]: Fig. 4 is a sectional view taken along line IV-IV of Fig. 2.
- [Fig. 5]: Fig. 5 is a plan view showing a pressure member in the power transmitting apparatus.
- [Fig. 6]: Fig. 6 is a back view showing the pressure member in the power transmitting apparatus.
- [Fig. 7]: Fig. 7 is a sectional view taken along line VII-VII of Fig. 5.
- [Fig. 8]: Fig. 8 includes a side view and a bottom view showing a receiving member in the power transmitting apparatus.
- [Fig. 9]: Fig. 9 is a sectional view taken along line IX-IX of Fig. 8.
- [Fig. 10]: Fig. 10 is a developed sectional view showing a third cam surface and a fourth cam surface constituting a pressure-contact assisting cam and a first cam surface and a second cam surface, and a fifth cam surface and a sixth cam surface constituting a back torque limiter cam in the power transmitting apparatus.
- [Fig. 11]: Fig. 11 includes developed sectional views showing the process of assembling the clutch member and the pressure member in the power transmitting apparatus.
- [Fig. 12]: Fig. 12 includes developed sectional views showing the process of assembling the clutch member and the pressure member in a power transmitting apparatus according to another embodiment of the present invention.
- [Fig. 13]: Fig. 13 is a perspective view showing receiving members in a power transmitting apparatus according to another embodiment of the present invention.

### Description of Embodiments

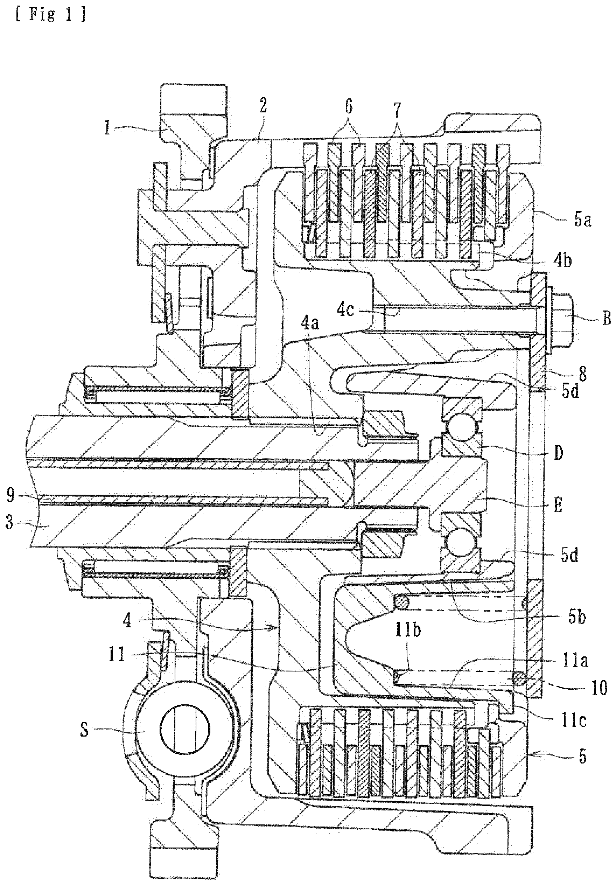

Embodiments of the present invention will be specifically described below with reference to the drawings. A power transmitting apparatus according to this embodiment is mounted on a vehicle such as a motorcycle to arbitrarily transmit or cut-off the driving force of an engine to a transmission or driving wheel. As shown in Fig. 1, the power transmitting apparatus mainly include a clutch housing 2 on which a gear 1 as an input member is mounted, a clutch member 4 connected to a shaft 3 as an output member, a pressure member 5 formed at the right end in the figure of the clutch member 4, driving clutch plates 6 connected to the clutch housing 2 and driven clutch plates 7 connected to the clutch member 4, a fixing member 8, a pushrod 9, clutch springs 10 as biasing means, and at least one receiving member 11. In the figure, reference sign S denotes a damper, and reference sign D denotes a ball bearing.

The gear 1 can rotate about the shaft 3 when driving force (rotational force) transmitted from the engine is input, and is connected to the clutch housing 2 with rivets or the like. The clutch housing 2 comprises a cylindrical case member that is open at its right end in the figure, and the plurality of driving clutch plates 6 are attached to the inner peripheral wall thereof. The driving clutch plates 6 are each made of a plate material formed in a substantially annular shape, and are fitted in a spline formed on the inner peripheral surface of the clutch housing 2 so that they can rotate with the rotation of the clutch housing 2 and can slide in the axial direction (horizontal direction in Fig. 1).

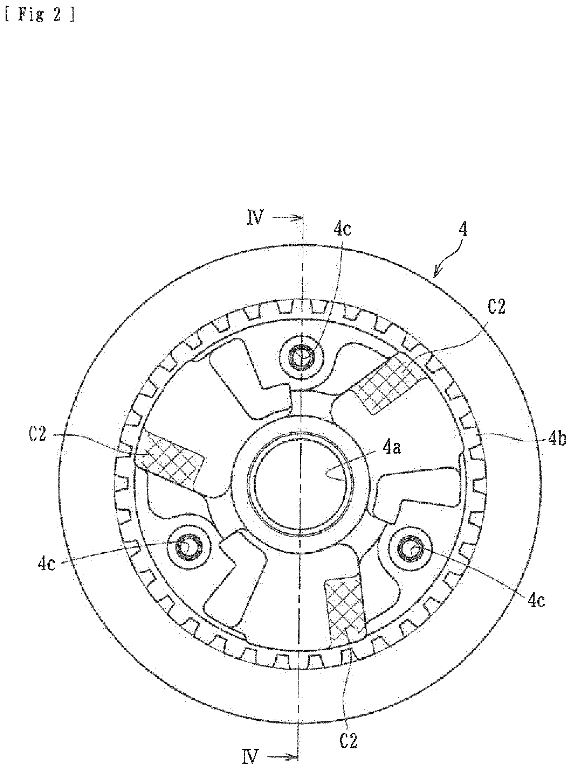

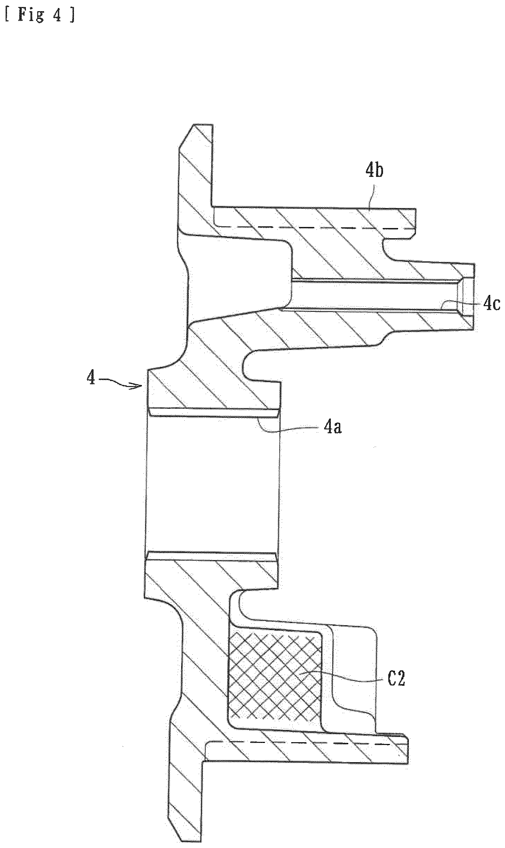

The clutch member 4 comprises a member disposed in the clutch housing 2, and has, as shown in Figs. 2 to 4, a central hole 4a through which the shaft 3 can be passed, an outer peripheral wall 4b on which a spline is formed, and bolt holes 4c through which bolts B can be passed. A spline is formed on each of the inner peripheral surface of the central hole 4a and the outer peripheral surface of the shaft 3. The shaft 3 is connected to the central hole 4a by spline fitting so that, when the clutch member 4 rotates, the shaft 3 also rotates. The driven clutch plates 7 are fitted in and attached to the spline formed on the outer peripheral wall 4b.

More specifically, the spline formed on the outer peripheral wall 4b of the clutch member 4 comprises a groove-ridge shape integrally formed substantially throughout the circumference of the outer peripheral wall 4b. The driven clutch plates 7 are fitted in grooves constituting the spline so that the movement of the driven clutch plates 7 relative to the clutch member 4 is allowed in the axial direction and is restricted in the rotational direction and the driven clutch plates 7 can rotate together with the clutch member 4.

Such driven clutch plates 7 are stacked alternately with the driving clutch plates 6 so that each adjacent pair of driving clutch plate 6 and driven clutch plate 7 are brought into pressure contact or pressure-contact force is released. That is, the driving clutch plates 6 and the driven clutch plates 7 are allowed to slide in the axial direction of the clutch member 4. When pressed by the pressure member 5 to the left in Fig. 1, they are brought into pressure contact, and the rotational force of the clutch housing 2 is transmitted through the clutch member 4 to the shaft 3. When pressure from the pressure member 5 is released, the pressure-contact force is released, the clutch member 4 stops following the rotation of the clutch housing 2 and stops, and the rotational force is not transmitted to the shaft 3.

The fixing member 8 is fixed by the bolts B passed through the bolt holes 4c, and the clutch springs 10 serving as biasing means are attached to the fixing member 8. Such clutch springs 10 comprise coil springs whose one ends are in contact with the receiving members 11 and whose the other ends are in contact with and attached to the fixing member 8, and can always bias the pressure member 5 in a direction such that the driving clutch plates 6 and the driven clutch plates 7 are brought into pressure contact (that is, a direction such that the pressure member 5 is moved closer to the clutch member 4).

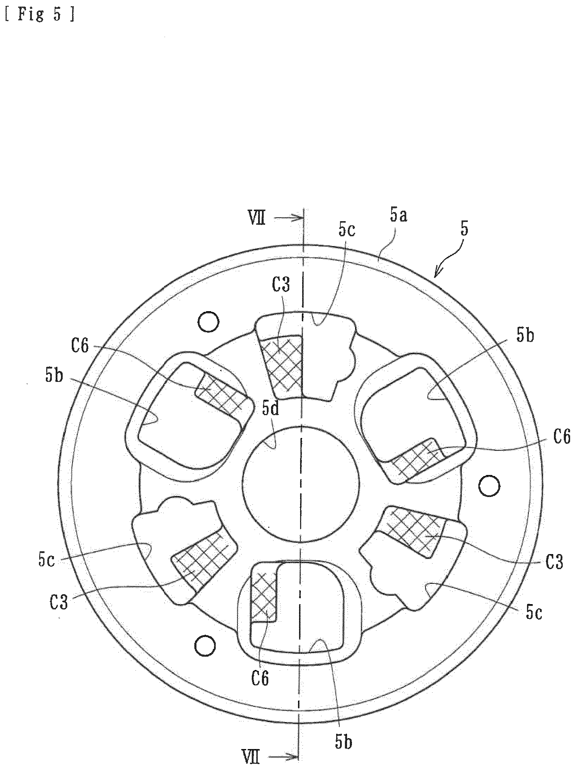

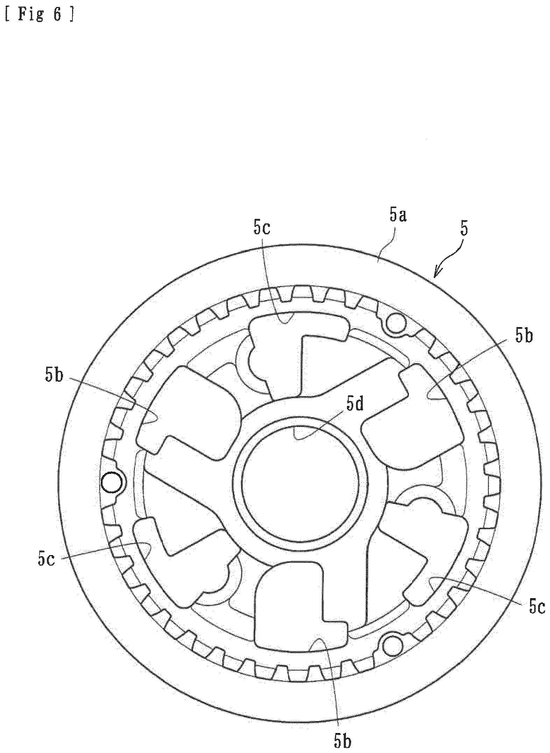

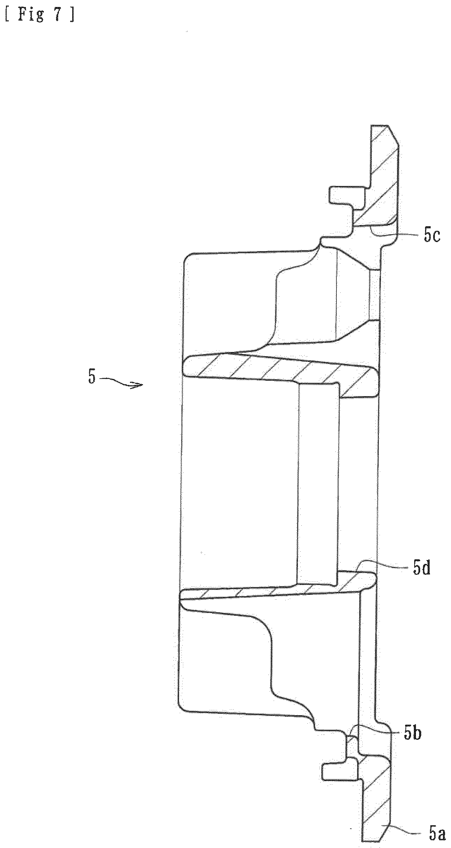

The pressure member 5 is attached to the right end in Fig. 1 of the clutch member 4 movably in the axial direction of the clutch member 4 (the horizontal direction in Fig. 1), and can bring the driving clutch plates 6 and the driven clutch plates 7 into pressure contact or release pressure-contact force, with its axial movement relative to the clutch member 4. More specifically, the pressure member 5 has, as shown in Figs. 5 to 7, a flange portion 5a capable of bringing the driving clutch plates 6 and the driven clutch plates 7 into pressure contact, at least one fitting hole 5b for fitting the at least one receiving members 11, through holes 5c, and a central hole 5d.

As shown in Fig. 1, a pressed member E is fitted in the central hole 5d of the pressure member 5 with the ball bearing D interposed therebetween. The pressed member E is attached to the protruding end of the shaft 3, and is capable of following the movement of the pushrod 9. When a driver operates an operating means such as a clutch lever (not shown) and thereby causes the pushrod 9 to protrude to the right in the figure, the pressed member E moves in the same direction, and therefore the pressure member 5 can be moved against the biasing force of the clutch springs 10, to the right (away from the clutch member 4).

When the pressure member 5 moves to the right, the pressure-contact force between the driving clutch plates 6 and the driven clutch plates 7 is released, and the rotational force input to the gear 1 and the clutch housing 2 is not transmitted to the clutch member 4 and the shaft 3 and is cut off. That is, the pressure member 5 is configured to bring the driving clutch plates 6 and the driven clutch plates 7 into pressure contact or release pressure-contact force with its axial movement relative to the clutch member 4.

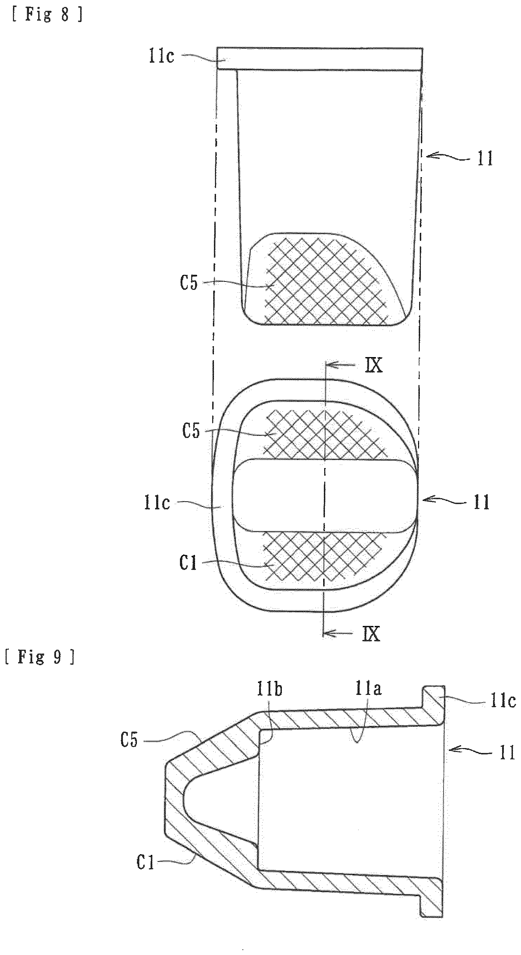

A plurality of (three) fitting holes 5b are formed concyclically in the pressure member 5 at regular intervals, and the receiving members 11 are fitted in the fitting holes 5b. The receiving members 11 fitted in the fitting holes 5b of the pressure member 5 are in contact with one ends of the clutch springs 10 and can receive their biasing force, and are separate from the pressure member 5. Specifically, the receiving members 11 according to this embodiment comprise cup-like members having, as shown in Figs. 8 and 9, a recessed portion 11a that houses the clutch spring 10, a receiving portion 11b that is formed in the recessed portion 11a and that is in contact with one end of the clutch spring 10 and receives biasing force, and a transmitting portion 11c that is in contact with the pressure member 5 and can transmit the biasing force of the clutch spring 10 to the pressure member 5.

The transmitting portion 11c comprises a flange portion formed on the open side of the receiving member 11. When the receiving member 11 is fitted in the fitting hole 5b, the transmitting portion 11c is in contact with the opening edge of the fitting hole 5b. After the receiving members 11 are fitted in the fitting holes 5b, the clutch springs 10 are housed in the recessed portions 11a, with one ends thereof in contact with the receiving portions 11b. The biasing force of the clutch springs 10 is thereby transmitted through the transmitting portions 11c of the receiving members 11 to the pressure member 5. By the transmitted biasing force, the driving clutch plates 6 and the driven clutch plates 7 can be brought into pressure contact.

The power transmitting apparatus according to this embodiment has a pressure-contact assisting cam that, when the rotational force input to the gear 1 as an input member can be transmitted to the shaft 3 as an output member and the pressure member 5 and the clutch member 4 rotate relative to each other, can increase pressure-contact force between the driving clutch plates 6 and the driven clutch plates 7, and a back torque limiter cam that, when the rotation of the shaft 3 as an output member exceeds the rotational speed of the gear 1 as an input member and the pressure member 5 and the clutch member 4 rotate relative to each other, releases the pressure-contact force between the driving clutch plates 6 and the driven clutch plates 7. Cam surfaces (first cam surface C1 to sixth cam surface C6) constituting the pressure-contact assisting cam and the back torque limiter cam are shown shaded (cross-hatched).

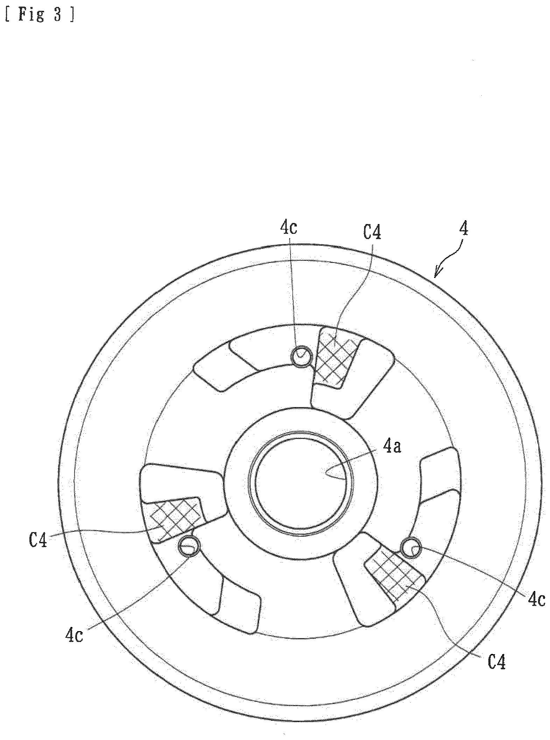

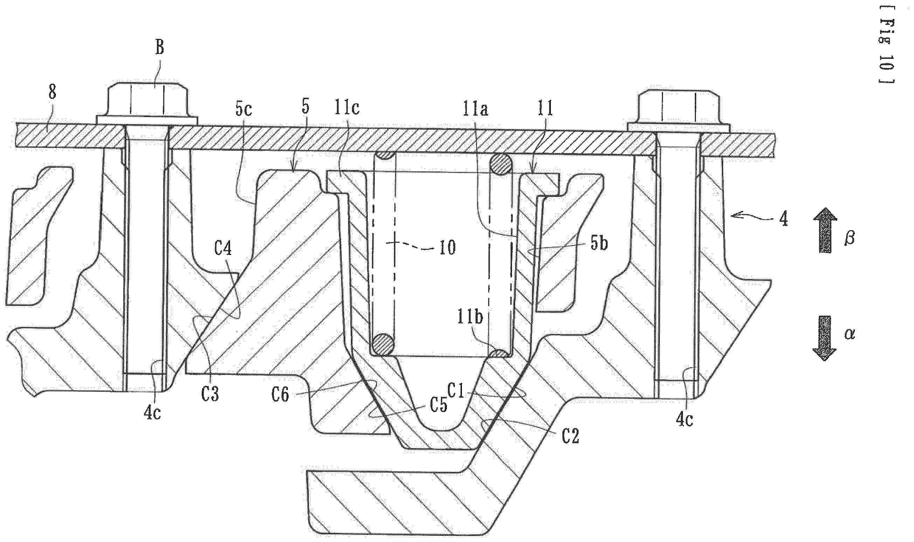

The pressure-contact assisting cam according to this embodiment is formed by opposing a third cam surface C3 and a fourth cam surface C4 respectively formed on the pressure member 5 and the clutch member 4. That is, when assembling the clutch member 4 and the pressure member 5, as shown in Fig. 10, a third cam surface C3 formed on the pressure member 5 (see Fig. 5) and a fourth cam surface C4 formed on the clutch member 4 (see Fig. 3) are opposed. Thereby, when the rotational force input to the gear 1 can be transmitted to the shaft 3 and the pressure member 5 and the clutch member 4 rotate relative to each other, the pressure member 5 is moved in the α direction in the figure and closer to the clutch member 4 by the cam action of the third cam surface C3 and the fourth cam surface C4, and the pressure-contact force between the driving clutch plates 6 and the driven clutch plates 7 is thereby increased.

The back torque limiter cam according to this embodiment is formed by opposing a first cam surface C1 and a second cam surface C2 respectively formed on the receiving member 11 and the clutch member 4. That is, when assembling the clutch member 4, the pressure member 5, and the receiving member 11, as shown in Fig. 10, a first cam surface C1 formed on a side surface of the bottom portion of the receiving member 11 (see Figs. 8 and 9) and a second cam surface C2 formed on the clutch member 4 (see Fig. 2) are opposed. Thereby, when the rotation of the shaft 3 exceeds the rotational speed of the gear 1 and the pressure member 5 and the clutch member 4 rotate relative to each other, the receiving member 11 is moved in the β direction in the figure by the cam action of the first cam surface C1 and the second cam surface C2, the biasing force of the clutch spring 10 transmitted to the pressure member 5 is reduced, and the pressure-contact force between the driving clutch plates 6 and the driven clutch plates 7 is thereby released.

The receiving member 11 according to this embodiment further has a fifth cam surface C5 formed on the side opposite to the first cam surface C1 as shown in Figs. 8 and 9, and a sixth cam surface C6 (see Fig. 5) facing the fifth cam surface C5 is formed on the pressure member 5. That is, a first cam surface C1 and a fifth cam surface C5 are formed on both side surfaces of the bottom portion of the receiving member 11, and the back torque limiter cam is formed by the first cam surface C1 and the second cam surface C2, and the fifth cam surface C5 and the sixth cam surface C6.

When assembling the clutch member 4, the pressure member 5, and the receiving member 11, as shown in Fig. 10, the first cam surface C1 formed on the receiving member 11 and the second cam surface C2 formed on the clutch member 4 are opposed, and the fifth cam surface C5 formed on the receiving member 11 and the sixth cam surface C6 formed on the pressure member 5 are opposed. Thereby, when the rotation of the shaft 3 exceeds the rotational speed of the gear 1 and the pressure member 5 and the clutch member 4 rotate relative to each other, the receiving member 11 is moved in the β direction in the figure by the cam action of the first cam surface C1 and the second cam surface C2, and the cam action of the fifth cam surface C5 and the sixth cam surface C6, and the pressure-contact force between the driving clutch plates 6 and the driven clutch plates 7 is released.

Thereby, when the back torque limiter cam functions, the receiving member 11 is subjected to both the cam action of the first cam surface C1 and the second cam surface C2 and the cam action of the fifth cam surface C5 and the sixth cam surface C6. In this embodiment, the slope angle (slope angle to the axis) of the first cam surface C1 and the second cam surface C2 constituting the back torque limiter cam is substantially the same as that of the third cam surface C3 and the fourth cam surface C4 constituting the pressure-contact assisting cam, and the slope angle of the first cam surface C1 and the second cam surface C2 is substantially the same as that of the fifth cam surface C5 and the sixth cam surface C6.

In this embodiment, at least cam surfaces formed on the receiving member 11 and cam surfaces facing those cam surfaces (the first cam surface C1 and the second cam surface C2, and the fifth cam surface C5 and the sixth cam surface C6 in this embodiment) comprise flat surfaces. Cam surfaces can be formed in a helical shape according to the size of the power transmitting apparatus. In that case, the receiving member 11 depends on the size of the power transmitting apparatus (diameters of the clutch member 4 and the pressure member 5), and is a part dedicated to the power transmitting apparatus having that size, whereas, according to this embodiment, the receiving member 11 can be attached to power transmitting apparatuses of various sizes. Other cam surfaces may be helical surfaces or flat surfaces.

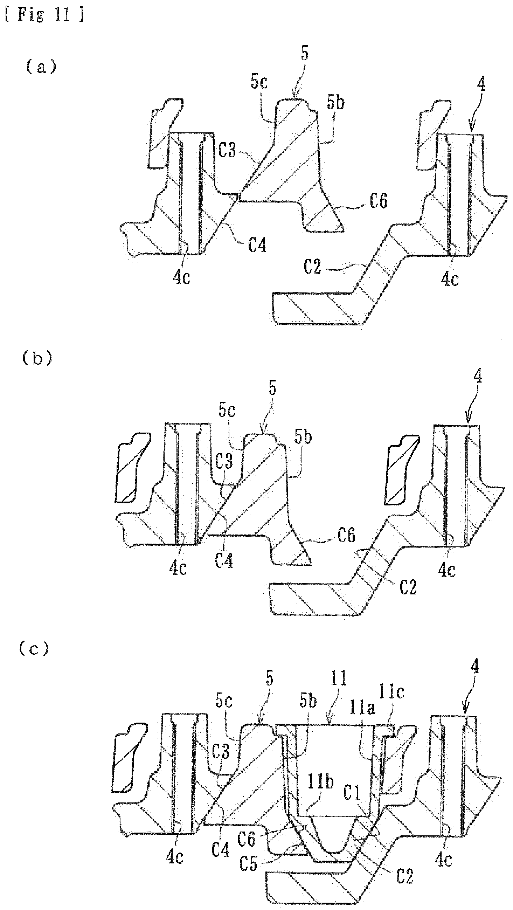

To assemble the clutch member 4 and the pressure member 5 according to this embodiment, as shown in Fig. 11, first, the clutch member 4 and the pressure member 5 are opposed (see Fig. 11 (a)), and are moved closer to each other so that the third cam surface C3 and the fourth cam surface C4 face each other and the pressure-contact assisting cam is formed (see Fig. 11 (b)). Then, the receiving member 11 is fitted in the fitting hole 5b of the pressure member 5 so that the first cam surface C1 and the second cam surface C2 face each other, the fifth cam surface C5 and the sixth cam surface C6 face each other, and the back torque limiter cam is formed (see Fig. 11 (c)). Thereby, when assembling the clutch member 4 and the pressure member 5, the clearance between a pair of cam surfaces constituting the back torque limiter cam (the first cam surface C1 and the second cam surface C2, the fifth cam surface C5 and the sixth cam surface C6) can be reduced while reducing the clearance between a pair of cam surfaces constituting the pressure-contact assisting cam (the third cam surface C3 and the fourth cam surface C4), and rattling can be reduced.

According to the above embodiment, the receiving portion for the clutch spring 10 (biasing means) on the pressure member 5 side comprises at least one receiving member 11 separate from the pressure member 5, the first cam surface C1 and the second cam surface C2 constituting the back torque limiter cam are respectively formed on the at least one receiving member 11 and the clutch member 4, and the third cam surface C3 and the fourth cam surface C4 constituting the pressure-contact assisting cam are respectively formed on the pressure member 5 and the clutch member 4. Therefore, the torque when the back torque limiter cam operates and the torque when the pressure-contact assisting cam operates can be made different from each other according to needs, and the clutch member 4 and the pressure member 5 can be satisfactorily assembled with the cam surfaces of the pressure-contact assisting cam (the third cam surface C3 and the fourth cam surface C4) facing each other with a small clearance therebetween and the cam surfaces of the back torque limiter cam (the first cam surface C1 and the second cam surface C2) facing each other with a small clearance therebetween, and rattling can be reduced.

In this embodiment, the at least one receiving member 11 in which the first cam surface C1 is formed is separate from the pressure member 5. Therefore, when the driver operates the clutch lever, the vibration caused by the clearance between the first cam surface C1 and the second cam surface C2 can be prevented from being transmitted from the pressure member 5 through the ball bearing D and so forth to the clutch lever, and operability can be improved.

In particular, since the first cam surface C1 and the second cam surface C2 according to this embodiment constitute the back torque limiter cam, and the third cam surface C3 and the fourth cam surface C4 constitute the pressure-contact assisting cam, the torque when the back torque limiter cam operates can be arbitrarily set by determining the slope angle of the first cam surface C1 formed on the at least one receiving member 11. Further, the at least one receiving member 11 according to this embodiment has the fifth cam surface C5 formed on the side opposite to the first cam surface C1, the sixth cam surface C6 facing the fifth cam surface C5 is formed on the pressure member 5, and the back torque limiter cam is formed by the first cam surface C1 and the second cam surface C2, and the fifth cam surface C5 and the sixth cam surface C6. Therefore, the torque when back torque limiter cam operates can be easily changed.

Further, in this embodiment, the slope angle (slope angle to the axial direction (horizontal direction in Fig. 1)) of the first cam surface C1 and the second cam surface C2 constituting the back torque limiter cam is substantially the same as that of the third cam surface C3 and the fourth cam surface C4 constituting the pressure-contact assisting cam. Therefore, the torque when the back torque limiter cam operates can be modified, compared to the torque when pressure-contact assisting cam operates, by the cam action of the fifth cam surface C5 and the sixth cam surface C6. In particular, since in this embodiment, the slope angle of the first cam surface C1 and the second cam surface C2 is substantially the same as that of the fifth cam surface C5 and the sixth cam surface C6, the at least one receiving member 11 can smoothly operate when the back torque limiter cam operates.

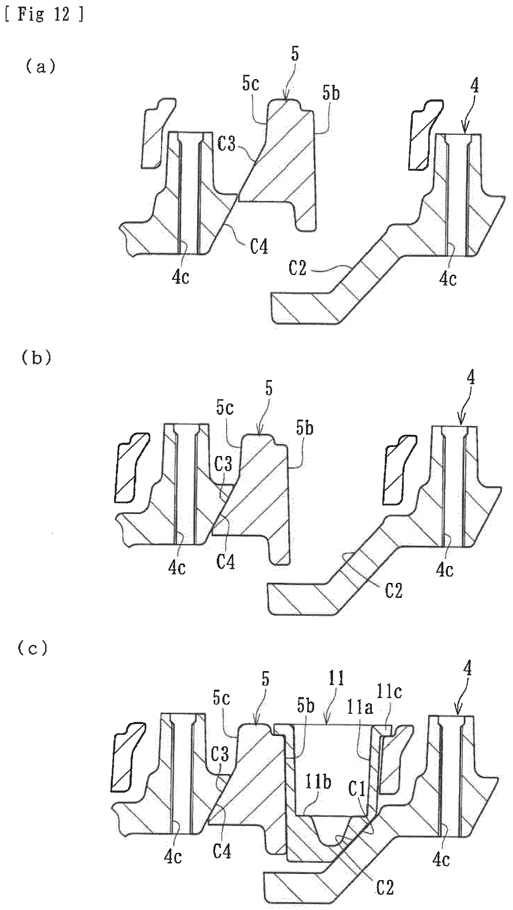

Although the at least one receiving member 11 according to this embodiment has the first cam surface C1 and the fifth cam surface C5, for example as shown in Fig. 12 (c), the at least one receiving member 11 may have the first cam surface C1 formed on only one side surface of the bottom portion (may not have the fifth cam surface C5 on the opposite side). Also in this case, the torque when the back torque limiter cam operates can be arbitrarily set by determining the slope angle of the first cam surface C1 formed on the at least one receiving member 11. To assemble the clutch member 4 and the pressure member 5 according to another embodiment, as shown in Fig. 12, first, the clutch member 4 and the pressure member 5 are opposed (see Fig. 12 (a)), and are moved closer to each other so that the third cam surface C3 and the fourth cam surface C4 face each other and the pressure-contact assisting cam is formed (see Fig. 12 (b)). Then, the receiving members 11 are fitted in the fitting holes 5b of the pressure member 5 so that the first cam surface C1 and the second cam surface C2 face each other, and the back torque limiter cam is formed (see Fig. 12 (c)). Thereby, when assembling the clutch member 4 and the pressure member 5, the clearance between cam surfaces constituting the back torque limiter cam (the first cam surface C1 and the second cam surface C2) can be reduced while reducing the clearance between a pair of cam surfaces constituting the pressure-contact assisting cam (the third cam surface C3 and the fourth cam surface C4), and rattling can be reduced.

The receiving members 11 according to this embodiment have a recessed portion 11a that houses the clutch spring 10 (biasing means), a receiving portion 11b that is formed in the recessed portion 11a and that is in contact with one end of the clutch spring 10 and receives biasing force, and a transmitting portion 11c that is in contact with the pressure member 5 (specifically, is engaged only in a direction in which the pressure member 5 is moved such that the driving clutch plates 6 and the driven clutch plates 7 come into pressure contact) and can transmit the biasing force of the clutch spring 10 to the pressure member 5. Therefore, when the back torque limiter cam operates, the pressure-contact force between the driving clutch plates 6 and the driven clutch plates 7 can be released more reliably and smoothly.

Further, according to this embodiment, at least cam surfaces formed on the receiving members 11 (the first cam surface C1 and the fifth cam surface C5 in this embodiment) and cam surfaces facing those cam surfaces (the second cam surface C2 and the sixth cam surface C6 in this embodiment) comprise flat surfaces. Therefore, the receiving members 11 are independent of the size of the power transmitting apparatus (diameters of the clutch member 4 and the pressure member 5), the versatility of the receiving members 11 can be improved, and the production cost can be reduced. Furthermore, since the receiving members 11 are concyclically attached to the pressure member 5, the function as a back torque limiter cam when the receiving members 11 operate can be performed smoothly and reliably.

Although embodiments have been described, the present invention is not limited to these embodiments. For example, the first cam surface C1 and the second cam surface C2 constituting the pressure-contact assisting cam may be respectively formed on the receiving members 11 and the clutch member 4, and the third cam surface C3 and the fourth cam surface C4 constituting the back torque limiter cam may be respectively formed on the pressure member 5 and the clutch member 4 (that is, the operations of the pressure-contact assisting cam and the back torque limiter cam may be reversed compared with the above embodiment). That is, the first cam surface C1 and the second cam surface C2 constituting one of the pressure-contact assisting cam and the back torque limiter cam may be respectively formed on the receiving members 11 and the clutch member 4, and the third cam surface C3 and the fourth cam surface C4 constituting the other of the pressure-contact assisting cam and the back torque limiter cam may be respectively formed on the pressure member 5 and the clutch member 4.

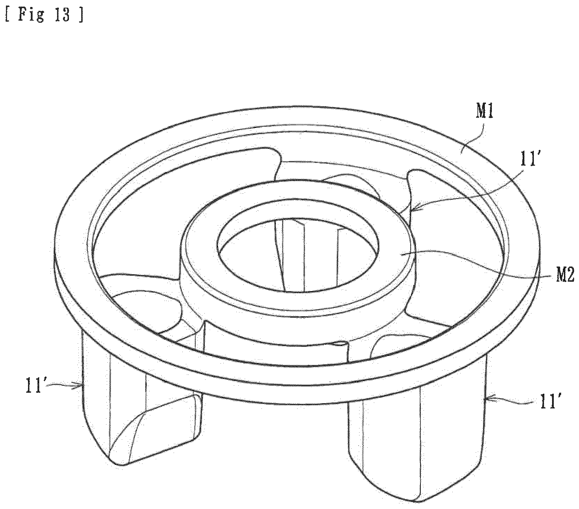

Further, although in this embodiment, a plurality of receiving members are formed independently from each other, a plurality of (three in this embodiment) receiving members 11' may be integrated as shown in Fig. 13. In this.case, two concentric annular portions M1, M2 are provided, one end of each of the receiving members 11' is integrated with the annular portion M1, the other end is integrated with the annular portion M2, and a single integrated part as a whole is formed. Since a plurality of receiving members 11' are integrated, the plurality of receiving members 11' can be fitted in the pressure member 5 all at once, and assemblability of the receiving members 11' can be improved. The power transmitting apparatus of the present invention can be applied to a multiplate clutch type power transmitting apparatus for motorcycles, automobiles, three or four-wheeled buggies, or general-purpose machines.

### Industrial Applicability

The present invention can also be applied to a power transmitting apparatus having a different external shape or another additional function as long as it is a power transmitting apparatus in which a receiving portion for a biasing means on the pressure member side comprises a receiving member separate from the pressure member, a first cam surface and a second cam surface constituting one of a pressure-contact assisting cam and a back torque limiter cam are respectively formed on the receiving member and a clutch member, and a third cam surface and a fourth cam surface constituting the other of the pressure-contact assisting cam and the back torque limiter cam are respectively formed on the pressure member and the clutch member.

### Reference Signs List

- 1: gear (input member)
- 2: clutch housing (input member)
- 3: shaft (output member)
- 4: clutch member
- 5: pressure member
- 6: driving clutch plate
- 7: driven clutch plate
- 8: fixing member
- 9: pushrod
- 10: clutch spring (biasing means)
- 11: receiving member
- C1: first cam surface
- C2: second cam surface
- C3: third cam surface
- C4: fourth cam surface
- C5: fifth cam surface
- C6: sixth cam surface

## Claims

1. A power transmitting apparatus comprising:
a clutch housing (2) that rotates with the rotation of an input member (1), a plurality of driving clutch plates (6) are attached to the clutch housing (2);
a clutch member (4) includes a plurality of driven clutch plates (7) formed alternately between the driving clutch plates (6) of the clutch housing (2), the clutch member (4) is connected to an output member (3);
a pressure member (5) is attached to the clutch member (4), the pressure member (5) brings the driving clutch plates (6) and the driven clutch plates (7) into a pressure contact or to a release pressure-contact force, axial movement occurs relative to the clutch member (4);
a biasing means (10) biases the pressure member (5) in a direction so that the driving clutch plates (6) and the driven clutch plate (7) come into pressure contact;
a pressure-contact assist cam increases the pressure-contact force between the driving clutch plates (6) and the driven clutch plates (7) when rotational force input into the input member (1) is transmitted to the output member (3) and the pressure member (5) and the clutch member (4) rotate relative to each other;
a back torque limiter cam releases the pressure-contact force between the driving clutch plates (6) and the driven clutch plates (7) when rotation of the output member (3) exceeds the rotational speed of the input member (1) and the pressure member (5) and the clutch member rotate (4) relative to each other;
the power transmitting apparatus transmitting or cutting off rotational force input into the input member (1) to the output member by bringing the driving clutch plates (6) and the driven clutch plates (7) into pressure contact or releasing the pressure-contact force;
a receiving portion for the biasing means (10) on the pressure member (5) side includes at least one receiving member (11) **characterised in that** the receiving member is separate from the pressure member (5);
a first cam surface (C1) is formed on the at least one receiving member (11).

2. The power transmitting apparatus according to Claim 1, wherein the first cam surface (C1), formed on the at least one receiving member (11) itself, and a second cam surface (C2), formed on the clutch member (4) to face the first cam surface (C1), constitute one of the pressure-contact assist cam and the back torque limiter cam.

3. The power transmitting apparatus according to Claim 2, wherein a third cam surface (C3) and a fourth cam surface (C4), constituting the other of the pressure-contact assist cam and the back torque limiter cam, are, respectively, formed on the pressure member (5) and the clutch member (4).

4. The power transmitting apparatus according to claim 1, wherein the first cam surface (C1) and a fifth cam surface (C5) are formed on both side surfaces of the at least one receiving member (11).

5. The power transmitting apparatus according to Claim 4, wherein the at least one receiving member (11) has a fifth cam surface (C5) formed on the side opposite to the first cam surface (C1), a sixth cam surface (C6), facing the fifth cam surface (C5), is formed on the pressure member (5), and the back torque limiter cam is formed by the first cam surface (C1) and the second cam surface (C2), and the fifth cam surface (C5) and the sixth cam surface (C6).

6. The power transmitting apparatus according to any of Claims 1 to 5, wherein the at least one receiving member (11) has a recessed portion that receives the biasing means (10), a receiving portion is formed in the recessed portion, the receiving portion is in contact with one end of the biasing means (10) and receives its biasing force, and a transmitting portion is in contact with the pressure member (5) to transmit the biasing force of the biasing means (10) to the pressure member (5).

7. The power transmitting apparatus according to any of Claims 1 to 6, wherein at least cam surfaces formed on the at least one receiving member (11) and cam surfaces facing the receiving member (11) cam surfaces comprise flat surfaces.

8. The power transmitting apparatus according to any of Claims 1 to 7, wherein a plurality of the receiving members (11) are concyclically attached to the pressure member (5).

9. The power transmitting apparatus according to any of Claims 1 to 8, wherein the plurality of receiving members (11) are integrated.

## Patentansprüche

1. Kraftübertragungsvorrichtung umfassend:
ein Kupplungsgehäuse (2), das sich mit der Drehung eines Eingangselements (1) dreht, wobei mehrere Antriebskupplungsscheiben (6) an dem Kupplungsgehäuse (2) angebracht sind;
ein Kupplungselement (4), das mehrere angetriebene Kupplungsscheiben (7) umfasst, die abwechselnd zwischen den Antriebskupplungsscheiben (6) des Kupplungsgehäuses (2) ausgebildet sind, wobei das Kupplungselement (4) mit einem Ausgangselement (3) verbunden ist;
ein Druckelement (5), das am Kupplungselement (4) befestigt ist, wobei das Druckelement (5) die antreibenden Kupplungsscheiben (6) und die angetriebenen Kupplungsscheiben (7) in Druckkontakt oder in eine lösende Druckkontaktkraft bringt, wobei eine axiale Bewegung relativ zum Kupplungselement (4) erfolgt;
ein Vorspannmittel (10), das das Druckelement (5) in eine Richtung vorspannt, so dass die antreibenden Kupplungsscheiben (6) und die angetriebenen Kupplungsscheiben (7) in Druckkontakt kommen;
einen Druckkontakt-Unterstützungsnocken, der die Druckkontaktkraft zwischen den antreibenden Kupplungsscheiben (6) und den angetriebenen Kupplungsscheiben (7) erhöht, wenn eine in das Eingangselement (1) eingegebene Drehkraft auf das Ausgangselement (3) übertragen wird und das Druckelement (5) und das Kupplungselement (4) sich relativ zueinander drehen;
einen hinteren Drehmomentbegrenzernocken, der die Druckkontaktkraft zwischen den antreibenden Kupplungsscheiben (6) und den angetriebenen Kupplungsscheiben (7) löst, wenn die Drehung des Ausgangselements (3) die Drehzahl des Eingangselements (1) überschreitet und das Druckelement (5) und das Kupplungselement (4) sich relativ zueinander drehen;
die Kraftübertragungsvorrichtung, die die in das Eingangselement (1) eingeleitete Drehkraft auf das Ausgangselement überträgt oder abschaltet, indem sie die antreibenden Kupplungsscheiben (6) und die angetriebenen Kupplungsscheiben (7) in Druckkontakt bringt oder die Druckkontaktkraft löst;
einen Aufnahmeabschnitt für das Vorspannmittel (10) auf der Seite des Druckelements (5), der mindestens ein Aufnahmeelement (11) umfasst,
**dadurch gekennzeichnet, dass**
das Aufnahmeelement von dem Druckelement (5) getrennt ist; eine erste Nockenfläche (C1), die an dem mindestens einen Aufnahmeelement (11) ausgebildet ist.

2. Kraftübertragungsvorrichtung nach Anspruch 1, wobei die erste Nockenfläche (C1), die an dem mindestens einen Aufnahmeelement (11) selbst ausgebildet ist, und eine zweite Nockenfläche (C2), die an dem Kupplungselement (4) so ausgebildet ist, dass sie der ersten Nockenfläche (C1) zugewandt ist, einen der Nocken für die Druckkontaktunterstützung und den Nocken für den hinteren Drehmomentbegrenzer bilden.

3. Kraftübertragungsvorrichtung nach Anspruch 2, wobei eine dritte Nockenfläche (C3) und eine vierte Nockenfläche (C4), die den anderen der beiden Nocken für die Druckkontaktunterstützung und den hinteren Drehmomentbegrenzernocken bilden, jeweils an dem Druckelement (5) und dem Kupplungselement (4) ausgebildet sind.

4. Kraftübertragungsvorrichtung nach Anspruch 1, wobei die erste Nockenfläche (C1) und eine fünfte Nockenfläche (C5) an beiden Seitenflächen des mindestens einen Aufnahmeelements (11) ausgebildet sind.

5. Kraftübertragungsvorrichtung nach Anspruch 4, wobei das mindestens eine Aufnahmeelement (11) eine fünfte Nockenfläche (C5) aufweist, die auf der der ersten Nockenfläche (C1) gegenüberliegenden Seite ausgebildet ist, eine sechste Nockenfläche (C6), die der fünften Nockenfläche (C5) zugewandt ist, an dem Druckelement (5) ausgebildet ist, und der hintere Drehmomentbegrenzernocken durch die erste Nockenfläche (C1) und die zweite Nockenfläche (C2) sowie die fünfte Nockenfläche (C5) und die sechste Nockenfläche (C6) gebildet wird.

6. Kraftübertragungsvorrichtung nach einem der Ansprüche 1 bis 5, wobei das mindestens eine Aufnahmeelement (11) einen vertieften Abschnitt aufweist, der das Vorspannmittel (10) aufnimmt, ein Aufnahmeabschnitt in dem vertieften Abschnitt ausgebildet ist, der Aufnahmeabschnitt in Kontakt mit einem Ende des Vorspannmittels (10) steht und dessen Vorspannkraft aufnimmt, und ein Übertragungsabschnitt in Kontakt mit dem Druckelement (5) steht, um die Vorspannkraft des Vorspannmittels (10) auf das Druckelement (5) zu übertragen.

7. Kraftübertragungsvorrichtung nach einem der Ansprüche 1 bis 6, wobei mindestens an dem mindestens einen Aufnahmeelement (11) ausgebildete Nockenflächen und dem Aufnahmeelement (11) zugewandte Nockenflächen ebene Flächen aufweisen.

8. Kraftübertragungsvorrichtung nach einem der Ansprüche 1 bis 7, wobei mehrere der Aufnahmeelemente (11) konzyklisch an dem Druckelement (5) angebracht sind.

9. Kraftübertragungsvorrichtung nach einem der Ansprüche 1 bis 8, wobei die mehreren Aufnahmeelemente (11) integriert sind.

## Revendications

1. Appareil de transmission de puissance comprenant :
un carter d'embrayage (2) qui tourne avec la rotation d'un élément d'entrée (1), une pluralité de disques d'embrayage d'entraînement (6) sont fixés au carter d'embrayage (2) ;
un élément d'embrayage (4) qui comporte une pluralité de disques d'embrayage entraînés (7) formés en alternance entre les disques d'embrayage d'entraînement (6) du carter d'embrayage (2), l'élément d'embrayage (4) est relié à un élément de sortie (3) ;
un élément de pression (5) qui est fixé à l'élément d'embrayage (4), l'élément de pression (5) amène les disques d'embrayage d'entraînement (6) et les disques d'embrayage entraînés (7) en contact de pression ou à une force de contact de pression de libération, un mouvement axial se produit par rapport à l'élément d'embrayage (4) ;
un moyen de sollicitation (10) qui sollicite l'élément de pression (5) dans une direction telle que les disques d'embrayage d'entraînement (6) et les disques d'embrayage entraînés (7) entrent en contact de pression ;
une came d'assistance de contact de pression qui augmente la force de contact de pression entre les disques d'embrayage d'entraînement (6) et les disques d'embrayage entraînés (7) lorsqu'une force de rotation entrée dans l'élément d'entrée (1) est transmise à l'élément de sortie (3) et l'élément de pression (5) et l'élément d'embrayage (4) tournent l'un par rapport à l'autre ;
une came de limiteur de couple arrière qui libère la force de contact de pression entre les disques d'embrayage d'entraînement (6) et les disques d'embrayage entraînés (7) lorsque la rotation de l'élément de sortie (3) dépasse la vitesse de rotation de l'élément d'entrée (1) et l'élément de pression (5) et l'élément d'embrayage (4) tournent l'un par rapport à l'autre ;
l'appareil de transmission de puissance transmettant ou coupant la force de rotation entrée dans l'élément d'entrée (1) à l'élément de sortie en amenant les disques d'embrayage d'entraînement (6) et les disques d'embrayage entraînés (7) en contact de pression ou en libérant la force de contact de pression ;
une partie de réception pour le moyen de sollicitation (10) sur le côté de l'élément de pression (5) comporte au moins un élément de réception (11),
**caractérisé en ce**
**que** l'élément de réception est séparé de l'élément de pression (5) ;
une première surface de came (C1) est formée sur l'au moins un élément de réception (11).

2. Appareil de transmission de puissance selon la revendication 1, dans lequel la première surface de came (C1), formée sur l'au moins un élément de réception (11) lui-même, et une deuxième surface de came (C2), formée sur l'élément d'embrayage (4) pour faire face à la première surface de came (C1), constituent l'une de la came d'assistance de contact de pression et de la came de limiteur de couple arrière.

3. Appareil de transmission de puissance selon la revendication 2, dans lequel une troisième surface de came (C3) et une quatrième surface de came (C4), constituant l'autre de la came d'assistance de contact de pression et de la came de limiteur de couple arrière, sont, respectivement, formées sur l'élément de pression (5) et l'élément d'embrayage (4).

4. Appareil de transmission de puissance selon la revendication 1, dans lequel la première surface de came (C1) et une cinquième surface de came (C5) sont formées sur les deux surfaces latérales de l'au moins un élément de réception (11).

5. Appareil de transmission de puissance selon la revendication 4, dans lequel l'au moins un élément de réception (11) a une cinquième surface de came (C5) formée sur le côté opposé à la première surface de came (C1), une sixième surface de came (C6), faisant face à la cinquième surface de came (C5), est formée sur l'élément de pression (5), et la came de limiteur de couple arrière est formée par la première surface de came (C1) et la deuxième surface de came (C2), et la cinquième surface de came (C5) et la sixième surface de came (C6).

6. Appareil de transmission de puissance selon l'une des revendications 1 à 5, dans lequel l'au moins un élément de réception (11) a une partie en retrait qui reçoit le moyen de sollicitation (10), une partie de réception est formée dans la partie en retrait, la partie de réception est en contact avec une extrémité du moyen de sollicitation (10) et reçoit sa force de sollicitation, et une partie de transmission est en contact avec l'élément de pression (5) pour transmettre la force de sollicitation du moyen de sollicitation (10) à l'élément de pression (5).

7. Appareil de transmission de puissance selon l'une des revendications 1 à 6, dans lequel au moins des surfaces de came formées sur l'au moins un élément de réception (11) et des surfaces de came faisant face à des surfaces de came de l'élément de réception (11) comprennent des surfaces plates.

8. Appareil de transmission de puissance selon l'une des revendications 1 à 7, dans lequel une pluralité d'éléments de réception (11) sont fixés de manière concyclique à l'élément de pression (5).

9. Appareil de transmission de puissance selon l'une des revendications 1 à 8, dans lequel la pluralité d'éléments de réception (11) sont intégrés.
